# EUROPÄISCHE PATENTSCHRIFT

(11) **EP 2 431 632 B1**
(45) Veröffentlichungstag und Bekanntmachung des Hinweises auf die Patenterteilung: **30.10.2013**
(21) Anmeldenummer: 10009898.7
(22) Anmeldetag: 20.09.2010
(51) Int. Cl.: F16H 1/22, F03D 11/02, F16H 57/02

(54) **Leistungsverzweigtes Getriebe für eine Windkraftanlage**
Splitted drive for a wind turbine
Engrenage à puissance dérivée pour une éolienne

(43) Veröffentlichungstag der Anmeldung: 21.03.2012
(73) Patentinhaber: Siemens Aktiengesellschaft, 80333 München (DE)
(72) Erfinder: Hulshof, Frans, 7102 KD Winterswijk (NL)
(74) Vertreter: Maier, Daniel Oliver

(56) Entgegenhaltungen:
- EP-A2- 1 279 867
- EP-A2- 1 619 386
- CN-A- 101 435 488
- CN-U- 201 521 604
- US-A- 2 327 777
- US-A- 2 911 845

## Beschreibung

Aus US 6,731,017 ist eine Antriebsvorrichtung für eine Windkraftanlage bekannt, bei dem ein Rotor über eine Rotorwelle mit einem außenverzahnten Zentralrad verbunden ist, um dessen Umfang eine Vielzahl Ritzelwellen angeordnet sind. Jede dieser Ritzelwellen umfaßt an einem ersten Ende ein mit dem Zentralrad kämmendes Ritzel, während an einem zweiten Ende ein Zahnrad angeordnet ist. Jeweils zwei Ritzelwellen bilden ein Ritzelwellenpaar. Das Zahnrad einer ersten Ritzelwelle eines Ritzelwellenpaars ist an einer dem Rotor zugewandten Seite des Zentralrads angeordnet. Dagegen ist das Zahnrad der zweiten Ritzelwelle eines Ritzelwellenpaars an einer dem Rotor abgewandten Seite des Zentralrads angeordnet. Beide Zahnräder eines Ritzelwellenpaar stehen in Eingriff mit Ritzeln an einer dem Ritzelwellenpaar zugeordneten Summierwelle. Jede Summierwelle ist wiederum mit jeweils einem von mehreren Generatoren der Windkraftanlage verbunden.

In gattungsgemäßen EP 1 279 867 B1 ist ein mehrstufiges Getriebe mit einer inneren Leistungsaufteilung beschrieben, das ein mit einer Eingangswelle bzw. Ausgangswelle verbundenes außenverzahntes Großzahnrad umfaßt. Das Großzahnrad ist von mehreren Ritzelwellen umgeben, deren Zahnritzel mit dem Großzahnrad kämmen. Die Ritzelwellen tragen je ein Zahnrad. Zwei Zahnräder bilden jeweils ein Zahnradpaar und sind wechselwaise vor und hinter dem Großzahnrad angeordnet. Die Zahnräder sind mit einer Schrägverzahnung von unterschiedlicher Steigungsrichtung versehen und stehen mit eine= gemeinsamen, doppelschrägverzahnten, axial frei gelagerten Ritzelwelle in Eingriff. Das Großzahnrad ist von insgesamt acht Ritzelwellen umgeben, deren Zahnräder mit vier jeweils einem Zahnradpaar gemeinsamen, doppelschrägverzahnten, axial frei gelagerten Ritzelwellen in Eingriff stehen und mit diesen eine erste Stufe der Leistungsaufteilung bilden. Die vier Ritzelwellen der ersten Stufe der Leistungsaufteilung stehen mit vier Ritzelwellen einer zweiten Stufe der Leistungsaufteilung in Verbindung. Die vier Ritzelwellen der zweiten Stufe der Leistungsaufteilung tragen wiederum je ein Zahnrad, wobei zwei Zahnräder ein Zahnradpaar bilden. Die Zahnräder eines Zahnradpaares stehen mit zwei jeweils einem Zahnradpaar gemeinsamen, frei gelagerten Ritzelwellen in Eingriff.

Aus EP 1 619 386 B1 ist ein mehrstufiges leistungsverzweigtes Windkraftgetriebe für eine Windkraftanlage höherer Leistung bekannt, das sich gegenüber dem in EP 1 279 867 B1 beschriebenen Getriebe insbesondere dadurch unterscheidet, daß anstelle einer Leistungsverzweigung auf zwei oder mehr parallele Abtriebswellen eine Leistungsverzweigung auf nur eine generatorseitige Welle erfolgt. Sämtliche Ritzelwellen sind einfach schrägverzahnt und über mindestens zwei beabstandete reine Radiallager und mindestens ein reines Axiallager gelagert. Damit ist bereits für die Lagerung der Ritzelwellen eine hohe Teilevielzahl erforderlich. Dementsprechend aufwendig gestaltet sich insbesondere bei Verwendung von Gleitlagern eine Schmierstoffversorgung für Lagerelemente und Verzahnungsteile.

Der vorliegenden Erfindung liegt die Aufgabe zugrunde, ein leistungsverzweigtes Getriebe für eine Windkraftanlage zu schaffen, das insbesondere für Offshore-Anwendungen eine sehr gute Montage- und Wartungsfreundlichkeit aufweist.

Diese Aufgabe wird erfindungsgemäß durch ein Getriebe mit den in Anspruch 1 angegebenen Merkmalen gelöst. Vorteilhafte Weiterbildungen der vorliegenden Erfindung sind in den abhängigen Ansprüchen angegeben.

Das erfindungsgemäße leistungsverzweigte Getriebe für eine Windkraftanlage umfaßt ein mit einer Rotornabe über eine Antriebswelle verbindbares außenverzahntes Zentralrad. Um das Zentralrad herum sind paarweise zumindest 8 Ritzelwellen angeordnet. Die Ritzelwellen weisen an einem ersten Ende jeweils ein mit dem Zentralrad kämmendes Ritzel und an einem zweiten Ende jeweils ein Zahnrad mit gegenüber dem Ritzel vergrößerten Durchmesser auf. Dabei bilden jeweils zwei Ritzelwellen ein Ritzelwellenpaar. Das Zahnrad einer ersten Ritzelwelle eines Ritzelwellenpaars ist an einer ersten Seite des Zentralrads angeordnet, während das Zahnrad der zweiten Ritzelwelle des Ritzelwellenpaars an der zweiten Seite des Zentralrads angeordnet ist. Darüber hinaus sind zumindest 4 jeweils einem Ritzelwellenpaar zugeordnete Summierwellen vorgesehen, deren Ritzel mit beiden Zahnrädern eines zugeordneten Ritzelwellenpaars in Eingriff stehen.

Darüber hinaus weist das erfindungsgemäße Getriebe ein das Zentralrad und die Ritzelwellen umfassendes Getriebegehäuse auf. Das Getriebegehäuse weist eine Mehrzahl konvexer Mantelflächenabschnitte auf und ist innerhalb einer Gondel einer Windkraftanlage bei gelöster Drehmomentstütze um eine Rotorachse drehbar. Grundsätzlich kann das Getriebegehäuse auch eine im wesentlichen zylindrische Mantelfläche aufweisen. Außerdem sind am Getriebegehäuse eine erste durch eine erste Schnittebene verlaufende Gehäusefuge und eine zweite durch eine zur ersten Schnittebene parallele zweite Schnittebene verlaufende Gehäusefuge vorgesehen. Zwischen der ersten und der zweiten Gehäusefuge verläuft eine dritte Gehäusefuge durch eine diagonale dritte Schnittebene. Dabei ist das Getriebegehäuse durch die Gehäusefugen in zumindest 4 Gehäuseteile unterteilt.

Zu den zumindest 4 Gehäuseteilen zählt ein erstes äußeres durch die erste Gehäusefuge begrenztes Gehäuseteil, bei dessen Demontage eine erste und eine zweite Summierwelle sowie eine zweite Ritzelwelle eines ersten Ritzelwellenpaars und eine erste Rizzelwelle eines zweiten Ritzelwellenpaars aus dem Getriebegehäuse entnehmbar sind. Ein zweites äußeres Gehäuseteil ist durch die zweite Gehäusefuge begrenzt. Bei einer Demontage des zweiten Gehäuseteils sind eine dritte und eine vierte Summierwells sowie eine zweite Ritzelwelle eines dritten Ritzelwellenpaars und eine erste Ritzelwelle eines vierten Ritzelwellenpaars aus dem Getriebegehäuse entnehmbar. Außerdem sind ein drittes durch die erste und dritte Gehäusefuge begrenztes Gehäuseteil sowie ein viertes durch die zweite und dritte Gehäusefuge begrenztes Gehäuseteil vorgesehen. Bei Trennung dieser Gehäuseteile sind das Zentralrad sowie eine erste Ritzelwelle eines ersten Ritzelwellenpaars und eine erste Ritzelwelle eines dritten Ritzelwellenpaars aus dem Getriebegehäuse entnehmbar. Durch die Drehbarkeit des Getriebegehäuses innerhalb einer Gondel und die Unterteilung des Getriebegehäuses sind im wesentlichen sämtliche Verzahnungsteile des erfindungsgemäßen Getriebes auf relativ einfache Weise zugänglich.

Entsprechend einer bevorzugten Weiterbildung der vorliegenden Erfindung ist an den Summierwellen jeweils an der zweiten Seite des Zentralrads ein Zahnrad angeordnet ist, das einer zweiten Getriebestufe zugeordnet ist. Dabei ist die erste Summierwelle dem ersten Ritzelwellenpaar zugeordnet, während die zweite Summierwelle dem zweiten Ritzelwellenpaar zugeordnet ist. In entsprechender Weise ist die dritte bzw, vierte Summierwelle dem dritten bzw. vierten Ritzelwellenpaar zugeordnet.

Die Zahnräder der Sumnierwellen kämmen vorzugsweise mit jeweils mit einem Ritzel einer abtriebsseitigen Ritzelwelle. Dabei bilden jeweils zwei abtriebsseitige Ritzelwellen ein abtriebsseitiges Ritzeiwellenpaar. Die abtriebsseitigen Ritzelwellen weisen außerdem jeweils ein Zahnrad auf. Die Zahnräder eines abtriebsseitigen Ritzelwellenpaars kämmen vorteilhafterweise jeweils mit Ritzeln einer Abtriebswelle. Die erste und die zweite Summierwelle sowie ein diesen zugeordnetes erstes abtriebsseitiges Ritzelwellenpaar sind vorzugsweise durch einen ersten Gehäusedeckel, abgedeckt. In entsprechender Weise sind die dritte und die vierte Summierwelle sowie ein diesen zugeordnetes zweites abtriebsseitiges Ritzelwellenpaar durch einen zweiten Gehäusedeckel abgedeckt. Auf diese Weise sind auch sämtliche Verzahnungsteile einer zweiten Getriebestufe äußerst einfach zugänglich.

Die vorliegende Erfindung wird nachfolgend an einem Ausführungsbeispiel anhand der Zeichnung näher erläutert. Es zeigt
- Figur 1: innerhalb eines Gehäuses eines leistungsverzweigten Getriebes für eine Windkraftanlage angeordnete verzahnte Bauelemente und Wellen in einer rotorseitigen perspektivischen Darstellung,
- Figur 2: die verzahnten Bauelemente und Wellen gemäß Figur 1 in einer generatorseitigen perspektivischen Darstellung,
- Figur 3: eine Anordnung mit einem die verzahnten Bauelemente und Wellen gemäß Figur 1 umfassenden ersten Gehäuseteil in einer generatorseitigen Ansicht,
- Figur 4: eine Anordnung mit einem die verzahnten Bauelemente und Wellen gemäß Figur 1 umfassenden ersten und dritten Gehäuseteil in einer generatorseitigen Ansicht,
- Figur 5: eine Anordnung mit einem die verzahnten Bauelemente und Wellen gemäß Figur 1 umfassenden ersten, dritten und vierten Gehäuseteil in einer generatorseitigen Ansicht,
- Figur 6: eine Anordnung mit einem die verzahnten Bauelemente und Wellen gemäß Figur 1 umfassenden ersten bis vierten Gehäuseteil in einer generatorseitigen Ansicht,
- Figur 7: die Anordnung gemäß Figur 6 mit zusätzlichen Gehäusedeckeln, die Verzahnungsteile einer zweiten Getriebestufe abdecken,
- Figur 8: eine Anordnung mit vom ersten und dritten Gehäuseteil umfaßten verzahnten Bauelementen und Wellen.

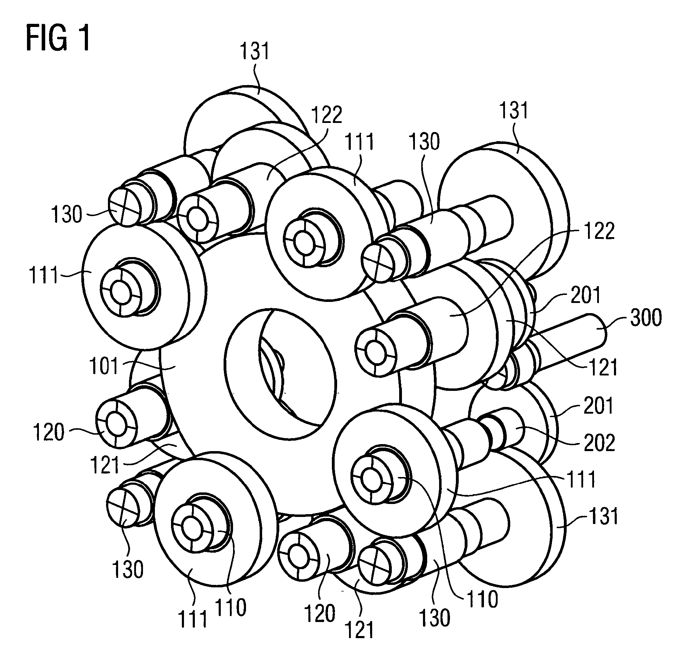

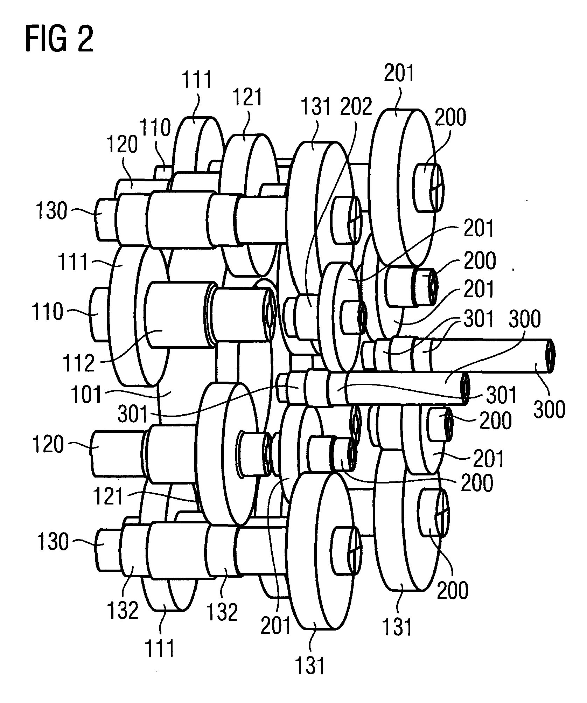

Entsprechend Figur 1 und 2 ist innerhalb eines Gehäuses eines leistungsverzweigten Getriebes für eine Windkraftanlage ein mit einer Rotornabe über eine Rotorwelle verbindbares außenverzahntes Zentralrad 101 angeordnet. Das Zentralrad 101 ist vorzugsweise drehfest auf einer als Hohlwelle ausgebildeten Rotorwelle befestigt, die baispielweise in einem an einer Gondel einer Windkraftanlage montierten Rotorlager gelagert ist. Um das Zentralrad 101 herum sind insgesamt 8 Ritzelwellen 110, 120 einer ersten Getriebestufe paarweise angeordnet, die an einem ersten Ende jeweils ein mit dem Zentralrad 101 kämmendes Ritzel 112, 122 und an einem zweiten Ende jeweils ein Zahnrad 111, 121 mit gegenüber dem Ritzel 112, 122 deutlich vergrößertem Durchmesser aufweisen. Dabei bilden jeweils zwei Ritzelwellen 110, 120 ein Ritzelwellenpaar. Das Zahnrad 111 einer ersten Ritzelwelle 110 eines Ritzelwellenpaars ist an einer der Rotornabe zugewandten Seite des Zentralrads 101 angeordnet, während das Zahnrad 121 der zweiten Ritzelwelle 120 des Ritzelwellenpaars an der von der Rotornabe abgewandten Seite des Zentralrads 101 angeordnet ist. Des weiteren sind insgesamt 4 jeweils einem Ritzelwellenpaar zugeordnete Summierwellen 130 vorgesehen. Die Summierwellen umfassen jeweils 2 axial beabstandete Ritzel 132, die jeweils mit einem Zahnrad 111, 121 eines zugeordneten Ritzelwellenpaars in Eingriff stehen.

Die Ritzelwellen 110, 120 sind über in zwei gegenüberliegende Gehäusewände eingesetzte Lager gelagert. Durch eine derartige symmetrische Anordnung der Ritzelwellen 110, 120 ist eine Lagerung der das Zentralrad 101 tragenden Rotorwelle abgesehen vom Eigengewicht des Zentralrads 101 und der Rotorwelle bei einer gleichmäßigen Generatorbelastung, d.h. Rotorleistung zu gleichen Anteilen auf 2 Generatoren aufgeteilt, frei von Radialkräften.

An den Summierwellen 130 ist jeweils an der von der Rotornabe abgewandten Seite des Zentralrads 101 ein Zahnrad 131 angeordnet, das einer zweiten Getriebestufe zugeordnet ist. Die Zahnräder 131 der Summierwellen 130 kämmen jeweils mit einem Ritzel 202 an einer Ritzelwelle 20C der zweiten Getriebestufe. Die Ritzelwellen 200 der zweiten Getriebestufe tragen jeweils ein Zahnrad 201, das fest mit der Ritzelwellen 200 verbunden ist und eine Schrägverzahnung aufweist. Die Schrägverzahnungen der vier Zahnräder 201 an den Ritzelwellen 200 der zweiten Getriebestufe haben im vorliegenden Ausführungsbeispiel eine paarweise unterschiedliche Steigungsrichtung. Je nach Anordnung der Zahnräder 201 im Getriebe ist diese Steigungsrichtung links- oder rechtssteigend ausgeführt. Jeweils zwei Zahnräder 201 mit einer unterschiedlichen Steigungsrichtung ein Zahnradpaar. Dabei kämmen die Zahnräder 201 eines Zahnradpaars jeweils mit einem Zahnritzel 301 einer gemeinsamen Abtriebswelle 300. Entsprechend dem vorliegenden Ausführungsbeispiel sind zwei Abtriebswellen 300 vorgesehen, die mit jeweils einem von zwei Generatoren einer Windkraftanlage verbunden werden können. Die Abtriebswellen 300 sind vorzugsweise doppelschrägverzahnt und axial frei gelagert.

Im Hinblick auf niedrige Geräuschemissionen sind das Zentralrad 101 und die Ritzel 112, 122 der Ritzelwellen 110, 120 vorzugsweise doppelschrägverzahnt oder pfeilverzahnt. Grundsätzlich können das Zentralrad 101 und die Ritzel 112, 122 der Ritzelwellen 110, 120 auch geradeverzahnt sein. Die Zahnräder 111, 121 der Ritzelwellen 110, 120 und die Ritzel 132 der Summierwellen 130 sind vorteilhafterweise schrägverzahnt. Dabei weisen die Zahnräder 111 der ersten Ritzelwellen 110 eine andere Steigungsrichtung als die Zahnräder 121 der zweiten Ritzelwellen 120. Hinsichtlich ihrer Schrägverzahnungswinkel sind die Zahnräder 111, 121 der Ritzelwellen 110, 120 sowie die Zahnräder 131 und Ritzel 132 der Summierwellen 130 derart ausgestaltet sind, daß Axialkräfte gegenseitig kompensiert werden. Die Ritzelwellen 110, 120 brauchen damit nur radial gelagert zu werden. Eine Axiallagerung der Summierwellen 130 kann daher entfallen.

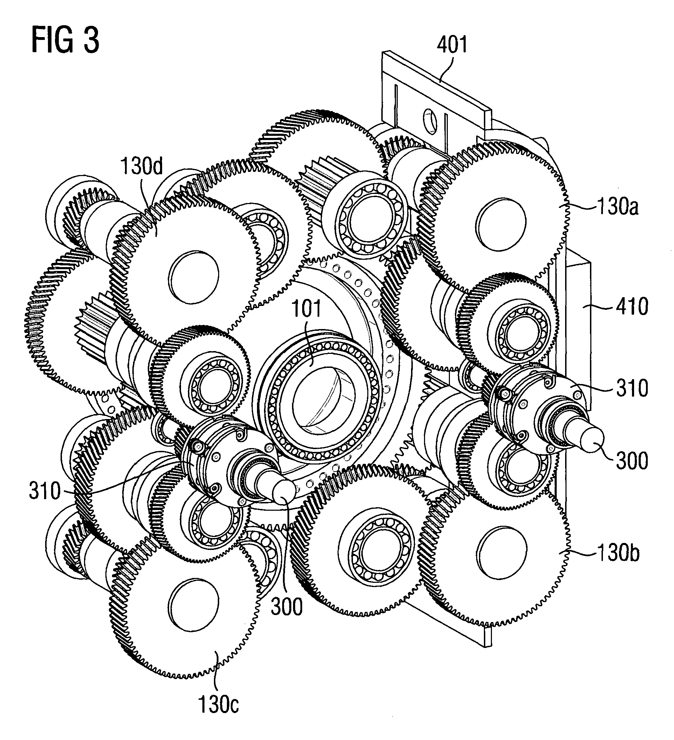

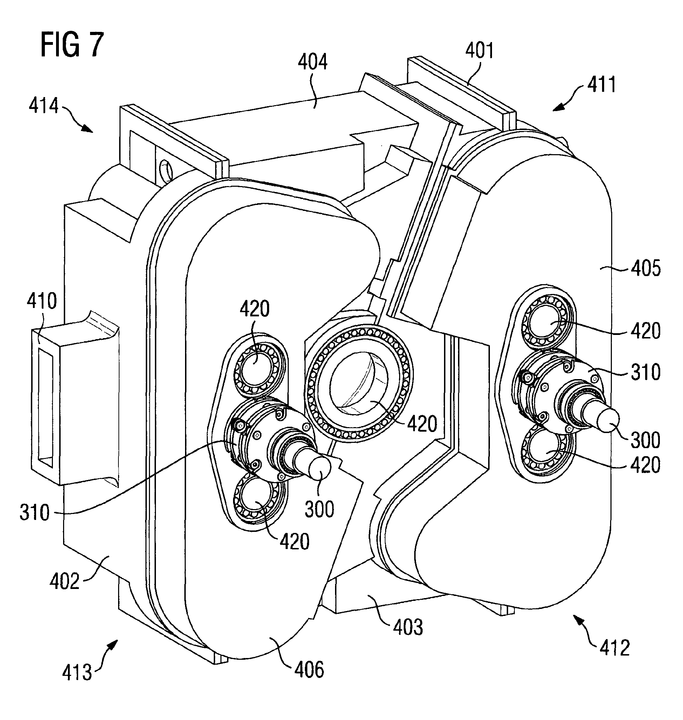

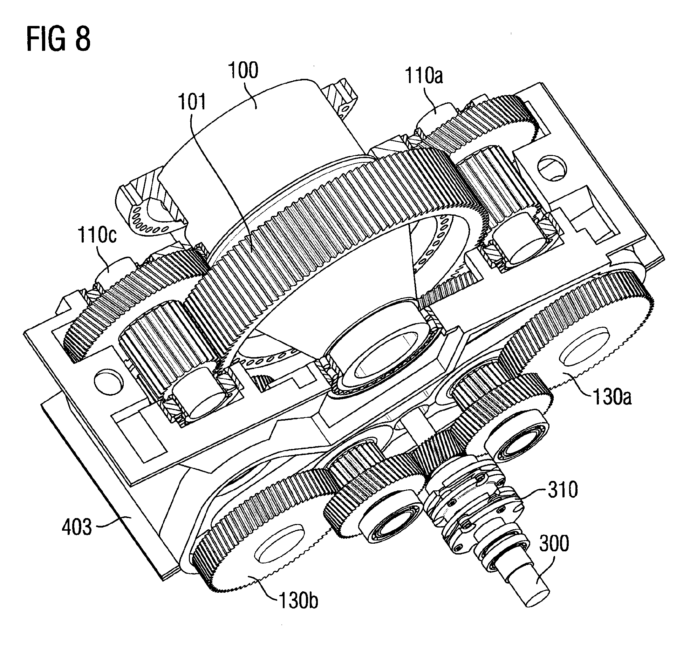

Das Zentralrad 101, die Ritzelwellen 110, 120, 200, die Summierwellen 130 und die Abtriebswellen 300 sind in dem in den Figuren 3-8 dargestellten Getriebegehäuse gelagert. Das Getriebegehäuse umfaßt insbesondere das Zentralrad 101 und die Ritzelwellen 110, 120, 200 und weist eine Mehrzahl konvexer Mantelflächenabschnitte 411-414 auf, die beispielsweise in Figur 7 dargestellt sind. Außerdem sind in Gehäuseaußenwänden Bohrungen 420 für Lagarsitze vorgesehen. Die Bohrungen 420 werden von außen mittels jeweils eines Lagerdeckels abgedeckt. Vorteilhafterweise sind im wesentlichen sämtliche Lager für innerhalb des Getriebegehäuses angeordnete Wellen 110, 120, 130, 200, 300durch Demontage eines jeweiligen Lagerdeckels zugänglich. Auf diese Weise könne Lager einfach getauscht werden. Darüber hinaus ist das Getriebegehäuse innerhalb einer Gondel einer Windkraftanlage bei gelösten Drehmomentstützen 410 um eine Achse der in Figur 8 dargestellten Rotorwelle 10C drehbar.

Das Getriebegehäuse weist eine erste durch eine erste Schnittebene verlaufende Gehäusefuge und eine zweite durch eine zur ersten Schnittebene parallele zweite Schnittebene verlaufende Gehäusefuge auf. Zwischen der ersten und der zweiten Gehäusefuge verläuft eine dritte Gehäusefuge durch eine diagonale dritte Schnittebene. Dabei ist das Getriebegehäuse im Bereich der ersten Getriebestufe durch die drei Gehäusefugen in vier Gehäuseteile 401-404 unterteilt.

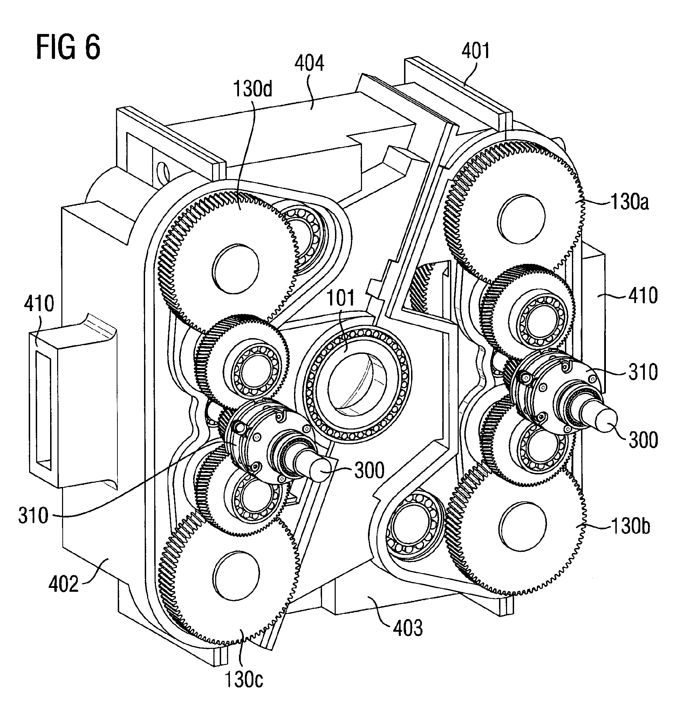

In Figur 3 ist ein erstes äußeres durch die erste Gehäusefuge begrenztes Gehäuseteil dargestellt, bei dessen Demontage eine erste und eine zweite Summierwelle 130a, 130b sowie eine zweite Ritzelwelle 120 eines ersten Ritzelwellenpaars und eine erste Ritzelwelle 110 eines zweiten Ritzelwellenpaars aus dem Getriebegehäuse entnehmbar sind. Dabei ist die erste Summierwelle 130a dem ersten Ritzelwellenpaar zugeordnet, während die zweite Summierwelle 130b dem zweiten Ritzelwellenpaar zugeordnet ist. Außerdem ist ein in Figur 6 dargestelltes zweites äußeres durch die zweite Gehäusefuge begrenztes Gehäuseteil 402 vorgesehen. Bei Demontage dieses Gehäuseteils 402 sind eine dritte und eine vierte Summierwelle 130c, 130d sowie eine zweite Ritzelwelle 120 eines dritten Ritzelwellenpaars und eine erste Ritzelwelle 110 eines vierten Ritzelwellenpaars aus dem Getriebegehäuse entnehmbar. Die dritte bzw. vierte Summierwelle 130c, 130d ist dem dritten bzw. vierten Ritzelwellenpaar zugeordnet.

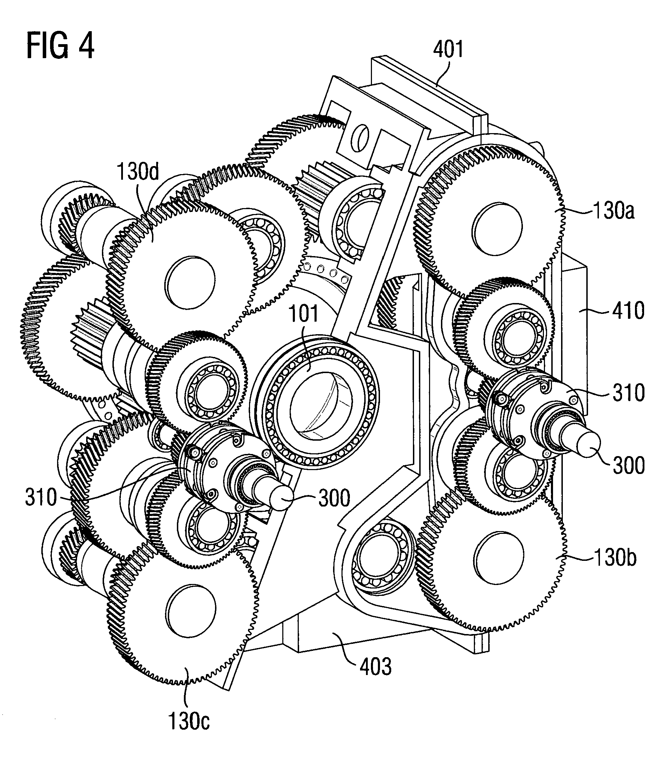

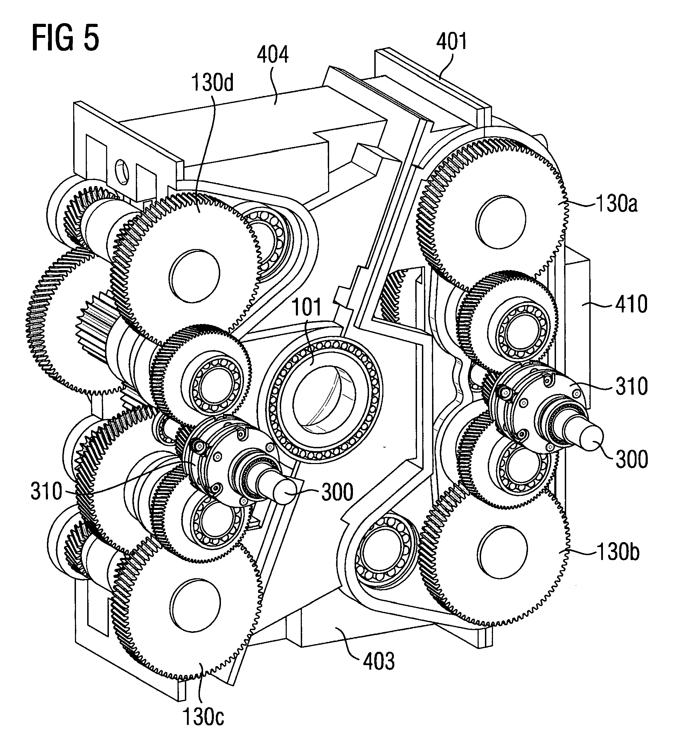

In Figur 4 ist ein drittes durch die erste und dritte Gehäusefuge begrenztes Gehäuseteil 403 dargestellt. Mit diesem Gehäuseteil 403 ist ein viertes Gehäuseteil 404 verbunden, das durch die zweite und dritte Gehäusefuge begrenzt und in Figur 5 dargestellt ist. Bei Trennung des dritten und vierten Gehäuseteils 403, 404 sind das Zentralrad 101 sowie eine erste Ritzelwelle 110a eines ersten Ritzelwellenpaars und eine erste Ritzelwelle 110c eines dritten Ritzelwellenpaars aus dem Getriebegehäuse entnehmbar. Dies ist beispielsweise in Figur 8 zu erkennen.

Das Getriebegehäuse ist innerhalb der Gondel einer Windkraftanlage mittels eines auf eine Abtriebswelle 300 einwirkenden Hilfsantriebs um die Achse der Rotorwelle 100 drehbar, Hierzu werden zunächst generatorseitig an den Abtriebswellen 300 angeordnete Kupplungen 310 geöffnet. Anschließend kann das Getriebegehäuse in eine beliebige Position gedreht werden, um beispielsweise bei Wartungsarbeiten auf gewünschte Verzahnungsteile zugreifen zu können. Insbesondere bei Wartungs-oder Instandsetzungsarbeitung an Offshore-Windkraftanlagen ist dies ein Vorteil. Zwei der acht Ritzelwellen 110, 120 der ersten Getriebestufe sind in einem Bereich angeordnet, in dem keine der drei genannten Gehäusefugen verläuft. Diese Ritzelwellen lassen sich axial durch Öffnen des Gehäuses montieren und demontieren, beispielsweise durch Öffnen des Gehäuses an einer optionalen radial umlaufenden Gehäusefuge.

In Figur 7 ist dargestellt, daß die erste und die zweite Summierwelle 130a, 130b sowie ein diesen zugeordnetes erstes abtriebsseitiges Ritzelwellenpaar durch einen ersten Gehäusedeckel 405 abgedeckt sind. Dementsprechend sind die dritte und die vierte Summierwelle 130c, 130d sowie ein diesen zugeordnetes zweites abtriebsseitiges Ritzelwellenpaar durch einen zweiten Gehäusedeckel 406 abgedeckt. Der erste Gehäusedeckel 405 ist mit dem ersten und dem dritten Gehäuseteil 401, 403 verbunden, während der zweite Gehäusedeckel 406 mit dem zweiten und dem vierten Gehäuseteils 402, 404 verbunden ist.

Die vorliegende Erfindung ist nicht auf das beschriebene Ausführungsbeispiel beschränkt.

## Patentansprüche

1. Leistungsverzweigtes Getriebe für eine Windkraftanlage mit
- einem mit einer Rotornabe über eine Antriebswelle verbindbaren außenverzahnten Zentralrad (101),
- zumindest 8 paarweise um das Zentralrad (101) herum angeordneten Ritzelwellen (110,120), die an einem ersten Ende jeweils ein mit dem Zentralrad (101) kämmendes Ritzel (112,122) und an einem zweiten Ende jeweils ein Zahnrad (111,121) mit gegenüber dem Ritzel (112,122) vergrößertem Durchmesser aufweisen, wobei jeweils zwei Ritzelwellen (110,120) ein Ritzelwellenpaar bilden und das Zahnrad (111) einer ersten Ritzelwelle (110) eines Ritzelwellenpaars an einer ersten Seite des Zentralrads (101) angeordnet ist, während das Zahnrad (121) der zweiten Ritzelwelle (120) des Ritzelwellenpaars an der zweiten Seite des Zentralrads (101) angeordnet ist,
- zumindest 4 jeweils einem Ritzelwellenpaar zugeordneten Summierwellen (130), deren Ritzel (132) mit beiden Zahnrädern (111,121) eines zugeordneten Ritzelwellenpaars (110,120) in Eingriff stehen,
- einem das Zentralrad (101) und die Ritzelwellen (110,120) umfassenden Getriebegehäuse, das eine Mehrzahl konvexer Mantelflächenabschnitte (411-414) aufweist und innerhalb einer Gondel einer Windkraftanlage bei gelöster Drehmomentstütze um eine Rotorachse drehbar ist,
- einer ersten durch eine erste Schnittebene verlaufenden Gehäusefuge und einer zweiten durch eine zur ersten Schnittebene parallele zweite Schnittebene verlaufenden Gehäusefuge,
- einer zwischen der ersten und der zweiten Gehäusefuge durch eine diagonale dritte Schnittebene verlaufenden dritten Gehäusefuge, wobei das Getriebegehäuse durch die Gehäusefugen in zumindest 4 Gehäuseteile (401-404) unterteilt ist,
- einem ersten äußeren durch die erste Gehäusefuge begrenzten Gehäuseteil (401), bei dessen Demontage eine erste und eine zweite Summierwelle (130a,130b) sowie eine zweite Ritzelwelle (120) eines ersten Ritzelwellenpaars und eine erste Ritzelwelle (110) eines zweiten Ritzelwellenpaars aus dem Getriebegehäuse entnehmbar sind,
- einem zweiten äußeren durch die zweite Gehäusefuge begrenzten Gehäuseteil (402), bei dessen Demontage eine dritte und eine vierte Summierwelle (130c,130d) sowie eine zweite Ritzelwelle (120) eines dritten Ritzelwellenpaars und eine erste Ritzelwelle (110) eines vierten Ritzelwellenpaars aus dem Getriebegehäuse entnehmbar sind,
- einem dritten durch die erste und dritte Gehäusefuge begrenzten Gehäuseteil (403) sowie einem vierten durch die zweite und dritte Gehäusefuge begrenzten Gehäuseteil (404), bei deren Trennung das Zentralrad (101) sowie eine erste Ritzelwelle (110a) eines ersten Ritzelwellenpaars und eine erste Ritzelwelle (110c) eines dritten Ritzelwellenpaars aus dem Getriebegehäuse entnehmbar sind,
wobei an den Summierwellen (130) jeweils an der zweiten Seite des Zentralrads (101) ein Zahnrad (131) angeordnet ist, das einer zweiten Getriebestufe zugeordnet ist, und bei dem die erste Summierwelle (130a) dem ersten Ritzelwellenpaar zugeordnet ist, und bei dem die zweite Summierwelle (130b) dem zweiten Ritzelwellenpaar zugeordnet ist, und bei dem die dritte Summierwelle (130c) dem dritten Ritzelwellenpaar zugeordnet ist, und bei dem die vierte Summierwelle (130d) dem vierten Ritzelwellenpaar zugeordnet ist, und
wobei die Zahnräder (131) der Summierwellen (130) mit jeweils einem Ritzel (202) einer abtriebsseitigen Ritzelwelle (200) kämmen, wobei jeweils zwei abtriebsseitige Ritzelwellen (200) ein abtriebsseitiges Ritzelwellenpaar bilden, und bei dem die abtriebsseitigen Ritzelwellen (200) jeweils ein Zahnrad (201) aufweisen, und bei dem die Zahnräder (201) eines abtriebsseitigen Ritzelwellenpaars jeweils mit Ritzeln (301) einer Abtriebswelle (300) kämmen,
**dadurch gekennzeichnet, dass** die erste und die zweite Summierwelle (130a,130b) sowie ein diesen zugeordnetes erstes abtriebsseitiges Ritzelwellenpaar durch einen ersten Gehäusedeckel (405) abgedeckt sind, und bei dem die dritte und die vierte Summierwelle (130c,130d) sowie ein diesen zugeordnetes zweites abtriebsseitiges Ritzelwellenpaar durch einen zweiten Gehäusedeckel (406) abgedeckt sind.

2. Getriebe nach Anspruch 1,
bei dem der erste Gehäusedeckel (405) mit dem ersten und dem dritten Gehäuseteil (401,403) verbunden ist, und bei dem der zweite Gehäusedeckel (406) mit dem zweiten und dem vierten Gehäuseteil (402,404) verbunden ist.

3. Getriebe nach einem der Ansprüche 1 bis 2,
bei dem in Gehäuseaußenwänden Bohrungen (420) für Lagersitze vorgesehen sind, und bei dem die Bohrungen (420) von außen mittels jeweils eines Lagerdeckels abgedeckt sind.

4. Getriebe nach Anspruch 3,
bei dem im Wesentlichen sämtliche Lager für innerhalb des Getriebegehäuses angeordnete Wellen durch Demontage eines jeweiligen Lagerdeckels zugänglich sind.

5. Getriebe nach einem der Ansprüche 1 bis 4,
bei dem das Getriebegehäuse innerhalb der Gondel einer Wind-kraftanlage mittels eines auf eine Abtriebswelle (300) einwirkenden Hilfsantriebs um die Rotorachse drehbar ist.

6. Getriebe nach einem der Ansprüche 1 bis 5,
bei dem die Zahnräder (111,121,201) der Ritzelwellen (110,120,200) und die Ritzel (132) der Summierwellen (130) schrägverzahnt sind, und bei dem die Summierwellen (130) nur radial gelagert sind, bei dem die Zahnräder (111,121,201) der Ritzelwellen (110,120,200) und die Ritzel (132) der Summierwellen (130) hinsichtlich ihrer Schrägverzahnungswinkel derart ausgestaltet sind, daß Axialkräfte gegenseitig kompensiert sind.

7. Getriebe nach einem der Ansprüche 1 bis 6,
bei dem das Zentralrad (101) und die Ritzel (112,122,202) der Ritzelwellen (110,120,200) doppelschrägverzahnt oder pfeilverzahnt sind.

8. Getriebe nach einem der Ansprüche 1 bis 7,
bei der die mit Rotornabe verbindbare Antriebswelle eine Rotorwelle (100) ist, und bei dem die Zahnräder (111) der ersten Ritzelwellen (110) rotorseitig angeordnet sind, und bei dem die Zahnräder (121) der zweiten Ritzelwellen (120) generatorseitig angeordnet sind.

## Claims

1. Power-split gearbox for a wind turbine generator, comprising
- an externally toothed bull gear (101) which can be coupled to a rotor hub by way of a drive shaft,
- at least eight pinion shafts (110,120) arranged in pairs around the perimeter of the bull gear (101) and having, at a first end, a pinion (112,122) in meshing engagement with the bull gear (101) in each case and, at a second end, a toothed gear wheel (111,121) having a greater diameter than the pinion (112,122) in each case, with two pinion shafts (110,120) in each case forming a pinion shaft pair and the toothed gear wheel (111) of a first pinion shaft (110) of a pinion shaft pair being arranged on a first side of the bull gear (101), while the toothed gear wheel (121) of the second pinion shaft (120) of the pinion shaft pair is arranged on the second side of the bull gear (101),
- at least four summation shafts (130), each assigned to one pinion shaft pair and having pinions (132) in engagement with both toothed gear wheels (111,121) of an assigned pinion shaft pair (110,120),
- a gearbox casing encompassing the bull gear (101) and the pinion shafts (110,120) and having a plurality of convex lateral surface sections (411-414), and being rotatable about a rotor axis inside a nacelle of a wind turbine generator with torque support arm released,
- a first casing joint extending through a first sectional plane and a second casing joint extending through a second sectional plane parallel to the first sectional plane,
- a third casing joint extending between the first and the second casing joint through a diagonal third sectional plane, with the gearbox casing being subdivided by means of the casing joints into at least four casing parts (401-404),
- a first external casing part (401) delimited by the first casing joint, with a first and a second summation shaft (130a,130b) as well as a second pinion shaft (120) of a first pinion shaft pair and a first pinion shaft (110) of a second pinion shaft pair being removable from the gearbox casing when the first external casing part (401) is dismantled,
- a second external casing part (402) delimited by the second casing joint, with a third and a fourth summation shaft (130c,130d) as well as a second pinion shaft (120) of a third pinion shaft pair and a first pinion shaft (110) of a fourth pinion shaft pair being removable from the gearbox casing when the second external casing part (402) is dismantled,
- a third casing part (403) delimited by the first and third casing joint and a fourth casing part (404) delimited by the second and third casing joint, with the bull gear (101) as a well as a first pinion shaft (110a) of a first pinion shaft pair and a first pinion shaft (110c) of a third pinion shaft pair being removable from the gearbox casing when the third and fourth casing parts are separated,
wherein a toothed gear wheel (131) assigned to a second gearbox stage is arranged on the summation shafts (130) in each case on the second side of the bull gear (101), and wherein the first summation shaft (130a) is assigned to the first pinion shaft pair, and wherein the second summation shaft (130b) is assigned to the second pinion shaft pair, and wherein the third summation shaft (130c) is assigned to the third pinion shaft pair, and wherein the fourth summation shaft (130d) is assigned to the fourth pinion shaft pair, and wherein the toothed gear wheels (131) of the summation shafts (130) are in meshing engagement with a pinion (202) of an output-side pinion shaft (200) in each case, with two output-side pinion shafts (200) in each case forming an output-side pinion shaft pair, and wherein the output-side pinion shafts (200) each have a toothed gear wheel (201), and wherein the toothed gear wheels (201) of an output-side pinion shaft pair are in each case in meshing engagement with pinions (301) of an output shaft (300),
**characterised in that**
the first and the second summation shaft (130a,130b) as well as a first output-side pinion shaft pair assigned thereto are covered by a first casing cover (405), and **in that** the third and the fourth summation shaft (130c,130d) as well as a second output-side pinion shaft pair assigned thereto are covered by a second casing cover (406).

2. Gearbox according to claim 1,
wherein the first casing cover (405) is connected to the first and the third casing part (401,403), and wherein the second casing cover (406) is connected to the second and the fourth casing part (402,404).

3. Gearbox according to one of claims 1 to 2,
wherein boreholes (420) for bearing seats are provided in external walls of the casing, and wherein the boreholes (420) are covered from the outside by means of a bearing cover in each case.

4. Gearbox according to claim 3,
wherein substantially all of the bearings for shafts arranged inside the gearbox casing are accessible by removing a respective bearing cover.

5. Gearbox according to one of claims 1 to 4,
wherein the gearbox casing is rotatable about the rotor axis inside the nacelle of a wind turbine generator by means of an auxiliary drive acting on an output shaft (300).

6. Gearbox according to one of claims 1 to 5,
wherein the toothed gear wheels (111,121,201) of the pinion shafts (110,120,200) and the pinions (132) of the summation shafts (130) have helical teeth, and wherein the summation shafts (130) are only mounted radially, with the toothed gear wheels (111,121,201) of the pinion shafts (110,120,200) and the pinions (132) of the summation shafts (130) being embodied in terms of their helix gear angle in such a way that axial forces are mutually compensated.

7. Gearbox according to one of claims 1 to 6,
wherein the bull gear (101) and the pinions (112,122,202) of the pinion shafts ((110,120,200) have double helical teeth or herringbone teeth.

8. Gearbox according to one of claims 1 to 7,
wherein the drive shaft which can be coupled to the rotor hub is a rotor shaft (100), and wherein the toothed gear wheels (111) of the first pinion shafts (110) are arranged on the rotor side, and wherein the toothed gear wheels (121) of the second pinion shafts (120) are arranged on the generator side.

## Revendications

1. Engrenage à puissance dérivée pour une éolienne comprenant
- une roue ( 101 ) planétaire dentée extérieurement et pouvant être reliée à un moyeu de rotor par un arbre d'entraînement,
- au moins 8 arbres ( 110, 120 ) de pignon, montés par paire autour de la roue ( 101 ) planétaire et ayant, à une première extrémité, respectivement, un pignon ( 112, 122 ) engrènant avec la roue ( 101 ) planétaire et, à une seconde extrémité, respectivement, une roue ( 111, 121 ) dentée de diamètre agrandi par rapport au pignon ( 112, 122 ), dans lequel, respectivement, deux arbres ( 110, 120 ) de pignon forment une paire de roues de pignon, et la roue ( 111 ) dentée d'un premier arbre ( 110 ) de pignon d'une paire d'arbres de pignon est montée sur un premier côté de la roue ( 101 ) planétaire, tandis que la roue ( 121 ) dentée du deuxième arbre ( 120 ) de pignon de la paire d'arbres de pignon est montée sur le second côté de la roue ( 101 ) planétaire,
- au moins 4 arbres ( 130 ) de sommation, associés, respectivement, à une paire d'arbres de pignon, dont les pignons sont en prise avec les deux roues ( 120, 121 ) dentées d'une paire ( 110, 120 ) d'arbres de pignon associés,
- un carter d'engrenage, qui contient la roue ( 101 ) planétaire et les arbres ( 110, 120 ) de pignon, qui a une pluralité de tronçons ( 411-414 ) convexes de surface latérale, et qui peut tourner autour d'un axe rotorique à l'intérieur d'une nacelle d'une éolienne lorsque des appuis de couple de rotation sont défaits,
- un premier joint de carter s'étendant dans un premier plan de coupe et un deuxième joint de carter s'étendant dans un deuxième plan de coupe parallèle au premier plan de coupe,
- un troisième joint de carter s'étendant dans un troisième plan de coupe en diagonale entre le premier et le deuxième joints de carter, le carter de l'engrenage étant subdivisé par les joints de carter en au moins 4 parties ( 401-404 ) de carter,
- une première partie ( 401 ) extérieure de carter, qui est délimitée par le premier joint de carter et dont le démontage permet de retirer du carter de l'engrenage un premier et un deuxième arbres ( 130a, 130b ) de sommation, ainsi qu'un deuxième arbre ( 120 ) de pignon d'une première paire d'arbres de pignon et un premier arbre ( 110 ) de pignon d'une deuxième paire d'arbres de pignon,
- une deuxième partie ( 402 ) extérieure de carter, qui est délimitée par le deuxième joint de carter et dont le démontage permet de retirer du carter de l'engrenage, un troisième et un quatrième arbres ( 130c, 130d ) de sommation, ainsi qu'un deuxième arbre ( 120 ) de pignon d'une troisième paire d'arbres de pignon et un premier arbre ( 110 ) de pignon d'une quatrième paire d'arbres de pignon,
- une troisième partie ( 403 ) de carter, délimitée par le premier et par le troisième joints de carter, dont la séparation permet de retirer, du carter de l'engrenage, la roue ( 101 ) planétaire, ainsi qu'un premier arbre ( 110a ) de pignon d'une première paire d'arbres de pignon et un premier arbre ( 110c ) de pignon d'une troisième paire d'arbres de pignon,
dans lequel, sur les arbres ( 130 ) de sommation, est montée, respectivement, sur le deuxième côté de la roue ( 101 ) planétaire, une roue ( 131 ) dentée, qui est associée à un deuxième étage d'engrenage et dans lequel le premier arbre ( 130a ) de sommation est associé à la première paire d'arbres de pignon et dans lequel le deuxième arbre ( 130b ) de sommation est associé à la deuxième paire d'arbres de pignon et dans lequel le troisième arbre ( 137 ) de sommation est associé à la troisième paire d'arbres de pignon et dans lequel le quatrième arbre ( 130d ) de sommation est associé à la quatrième paire d'arbres de pignon et
dans lequel les roues ( 131 ) dentées des arbres ( 130 ) de sommation engrènent avec respectivement un pignon ( 202 ) d'un arbre ( 202 ) de pignon du côté mené, respectivement deux arbres ( 200 ) de pignon du côté mené formant une paire d'arbres de pignon du côté mené et dans lequel les arbres ( 200 ) de pignon du côté mené ont respectivement une roue ( 201 ) dentée et dans lequel les roues ( 201 ) dentées d'une paire d'arbres de pignon du côté mené engrènent respectivement avec des pignons ( 301 ) d'un arbre ( 300 ) mené,
**caractérisé en ce que**
le premier et le deuxième arbres ( 130a, 130b ) de sommation, ainsi qu'une première paire d'arbres de pignon du côté mené qui leur est associée, sont recouverts d'un premier couvercle ( 405 ) de carter et dans lequel le troisième et le quatrième arbres ( 130c, 130d ) de sommation, ainsi qu'une deuxième paire d'arbres de pignon du côté mené qui leur est associée, sont recouverts d'un deuxième couvercle ( 406 ) de carter.

2. Engrenage suivant la revendication 1,
dans lequel, le premier couvercle ( 405 ) de carter est assemblé à la première et à la troisième parties ( 401, 403 ) de carter et dans lequel le deuxième couvercle ( 406 ) de carter est assemblé à la deuxième et à la quatrième parties ( 402, 404 ) de carter.

3. Engrenage suivant l'une des revendications 1 à 2,
dans lequel il est prévu, dans des parois extérieures du carter, des perçages ( 420 ) pour des sièges de palier et dans lequel les perçages ( 420 ) sont recouverts de l'extérieur au moyen de, respectivement, un couvercle de palier.

4. Engrenage suivant la revendication 3,
dans lequel sensiblement tous les paliers pour des arbres disposés à l'intérieur du carter de l'engrenage sont accessibles par démontage d'un couvercle de palier respectif.

5. Engrenage suivant l'une des revendications 1 à 4,
dans lequel le carter de l'engrenage peut tourner autour de l'axe rotorique à l'intérieur de la nacelle d'une éolienne, au moyen d'un entraînement auxiliaire agissant sur un arbre ( 300 ) mené.

6. Engrenage suivant l'une des revendications 1 à 5,
dans lequel les roues ( 111, 121, 201 ) dentées des arbres ( 110, 120, 200 ) de pignon et les pignons ( 132 ) des arbres ( 130 ) de sommation sont à denture hélicoïdale et dans lequel les arbres ( 130 ) de sommation ne sont montés que radialement, dans lequel les roues ( 111, 121, 201 ) dentées des arbres ( 110, 120, 200 ) de pignon, et les pignons ( 132 ) des arbres ( 130 ) de rotation sont constitués, en ce qui concerne leur angle de denture hélicoïdale, de manière à ce que des forces axiales se compensent mutuellement.

7. Engrenage suivant l'une des revendications 1 à 6,
dans lequel la roue ( 101 ) planétaire et les pignons ( 112, 122, 202 ) des arbres ( 110, 120, 200 ) de pignon sont à denture hélicoïdale double ou à denture à chevrons.

8. Engrenage suivant l'une des revendications 1 à 7,
dans lequel l'arbre d'entraînement, qui peut être relié au moyeu du rotor, est un arbre ( 100 ) rotorique et dans lequel les roues ( 111 ) dentées des premiers arbres ( 110 ) de pignon sont montées du côté du rotor et dans lequel les roues ( 121 ) dentées des deuxièmes arbres ( 120 ) de pignon sont montées du côté de la génératrice.
